# EUROPÄISCHE PATENTSCHRIFT

(11) **EP 0 606 509 B1**
(45) Veröffentlichungstag und Bekanntmachung des Hinweises auf die Patenterteilung: **02.10.1996**
(21) Anmeldenummer: 93100462.6
(22) Anmeldetag: 14.01.1993
(51) Int. Cl.: F16H 25/24

(54) **Wälzringgewindetrieb**
Roll-ring-screw-drive
Entraînement à vis avec bagues tourillonnantes

(43) Veröffentlichungstag der Anmeldung: 20.07.1994
(73) Patentinhaber: Gärtner, Robert, Dr., D-6308 Butzbach/Hessen (DE)
(72) Erfinder: Hirzel, Matthias, CH-8304 Wallisellen (CH); Kralemann, Thomas, CH-8185 Winkel (CH)
(74) Vertreter: Schlagwein, Udo, Dipl.-Ing.

(56) Entgegenhaltungen:
- EP-A- 0 034 388
- EP-A- 0 247 417
- EP-A- 0 410 032
- DE-A- 2 459 352
- DE-A- 3 002 383
- DE-A- 3 207 694
- FR-A- 2 091 361

## Beschreibung

Die Erfindung bezieht sich auf eine Mutter für einen Wälzringgewindetrieb nach dem Oberbegriff des Anspruchs 1.

Eine Mutter für eine Gewindespindel, bei der die Wälzringe jeweils in einem Schacht des Gehäuses angeordnet sind, ist aus der EP-A 410 032 bekannt. Zur Befestigung und Anstellung sind hier an den Außenringen der Wälzringe Vorsprünge angebracht, die in entsprechend geformte Vertiefungen am Gehäuse eingreifen. Sowohl die Vorsprünge als auch die Ausnehmungen sind sehr schwer herstellbar. Außerdem ist eine exakte Anpassung mit hohem Fertigungs- und Montageaufwand erforderlich. Die radiale Anstellung erfolgt über Blattfedern, weswegen eine "weiche" Lösung vorhanden ist, die im Extremfall zum Nachgeben neigt, also zu Axialspiel führt, was in vielen Fällen nicht akzeptiert werden kann.

Es ist daher Aufgabe der vorliegenden Erfindung eine Mutter für einen Wälzringgewindetrieb aufzuzeigen, der die oben genannten Nachteile nicht aufweist und insbesondere bei einfachem Aufbau eine exakte und starre Führung der Spindel gewährleistet, wobei die Wälzringe auch bei entfernter Spindel im Gehäuse gehalten werden.

Die Lösung dieser Aufgabe ist im kennzeichnenden Teil des Anspruchs 1 angegeben. Die Ansprüche 2 bis 9 enthalten spezielle Ausgestaltungen.

Gemäß der Erfindung werden die Außenringe der Wälzringe jeweils in einseitig geschlossene Aufnahmeschächte des einteiligen Gehäuses eingebracht. Damit die Wälzringe im Gehäuse exakt positioniert sind und bei entfernter Gewindespindel nicht herausfallen, ist jeder Außenring von einem Klemmstück umgeben, das den Außenring mindestens an diametral gegenüberliegenden Umfangsstellen umfaßt. Diese Klemmstücke besitzen vorzugsweise zwei gegenüberliegende Abflachungen, an denen sie entsprechend geformten Flächen des Aufnahmeschachtes gegenüberstehen. Dadurch ist eine drehsichere Fixierung der Klemmstücke im Gehäuse sichergestellt. Damit sich eine kraftschlüssige Befestigung des Lagers im Gehäuse ergibt, ist sowohl der Außenring des Wälzringes im Klemmstück als auch das Klemmstück im Aufnahmeschacht mit Preßsitz eingesetzt. Dies kann man dadurch erreichen, daß entweder das Klemmstück mit Übermaß im Schacht sitzt und durch elastische Verformung seine Sitzfläche so eingeengt wird, daß auch der Außenring des Wälzlagers festsitzt, oder daß an beiden Sitzflächen im nicht eingebauten Zustand ein Übermaß vorhanden ist.

Nach einer bevorzugten Ausführung bestehen die Klemmstücke in der axialen Draufsicht aus einem Teil mit etwa U-förmiger Gestalt aus hartem Kunststoff. Zum Zwecke einer sicheren radialen Halterung erstrecken sie sich dabei über mehr als 180 Grad und ergeben dadurch eine geringfügige formschlüssige Verbindung zwischen Wälzring und Klemmstück in radialer Richtung. Möglich ist aber auch die Verwendung von Klemmstücken, die aus zwei an diametral gegenüberliegenden Mantelflächen des Lagers angeordneten Teilen bestehen. Jedes dieser Teile besitzt eine Abflachung und sitzt an dieser Stelle unter Übermaß im Schacht. Auf der offenen Schachtseite kann so das Gehäuse verkleinert ausgeführt werden.

Damit die axiale Positionierung von Außenring und Klemmstück zueinander und im Schacht immer in einfacher Weise sichergestellt ist, besitzt das Klemmstück im Axialschnitt eine etwa L-förmige Gestalt.

Aus Montagegründen und aus Gründen der axialen Positionierung der Wälzringe ist es zweckmäßig, wenn die Klemmstücke auf der unbelasteten und offenen Seite des Aufnahmeschachtes eingebracht sind.

Um mit Sicherheit eine spielfreie Positionierung der Spindel in der Mutter zu erreichen, sind die Maßnahmen nach Anspruch 6 zweckmäßig. Durch eine definierte axiale Positionierung der Aufnahmeschächte gegenüber der Steigung der Gewindegänge der Spindel wird auf einfache Art und Weise erreicht, daß mindestens zwei Wälzringe mit ihren Berührungskante zueinander hin oder voneinander weg gerichtet sind. Wenn ein Wälzring zudem noch zusätzlich mit einer Schraube radial positioniert wird, entsteht ein in sich spielfreies Mutternsystem, dessen axiale Vorspannung einstellbar ist. Bei dieser Ausführung ergibt sich somit sowohl eine spielfreie als auch starre Positionierung der Wälzringe, die in vielen Anwendungsfällen erwünscht ist.

Wenn man als Wälzring ein spielfreies Rillenkugellager verwendet ergibt sich eine noch genauere Ausführung, und zwar auch dann, wenn keine axiale Vorspannung über zwei Wälzringe vorhanden ist.

Die Erfindung wird anhand von drei Figuren näher erläutert:
Figur 1 zeigt einen Längsschnitt durch eine erfindungsgemäße Spindelmutter;
Figur 2 zeigt einen Querschnitt durch einen Wälzring nach Figur 1; und
Figur 3 zeigt eine Variante zu Figur 2.

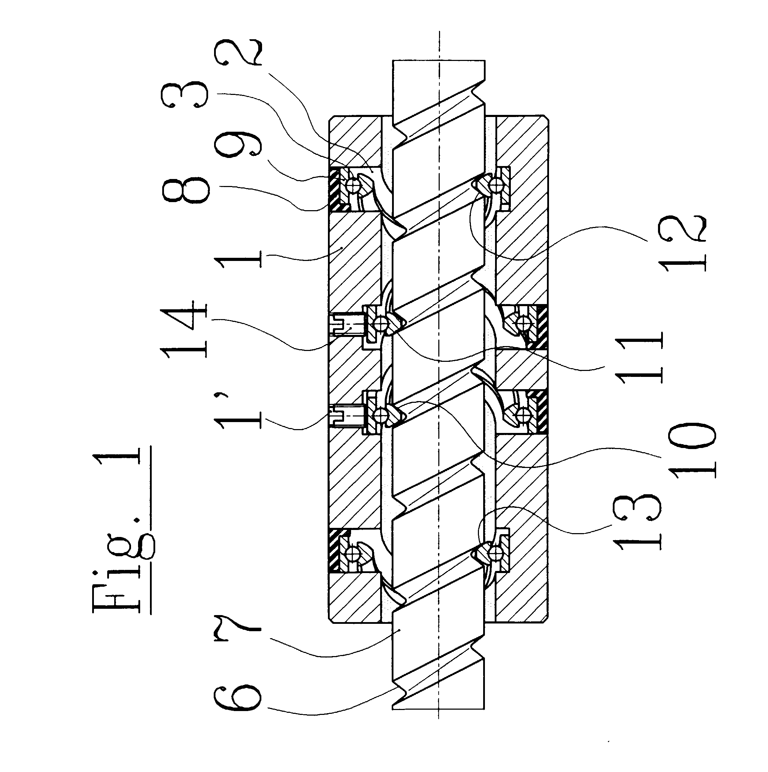

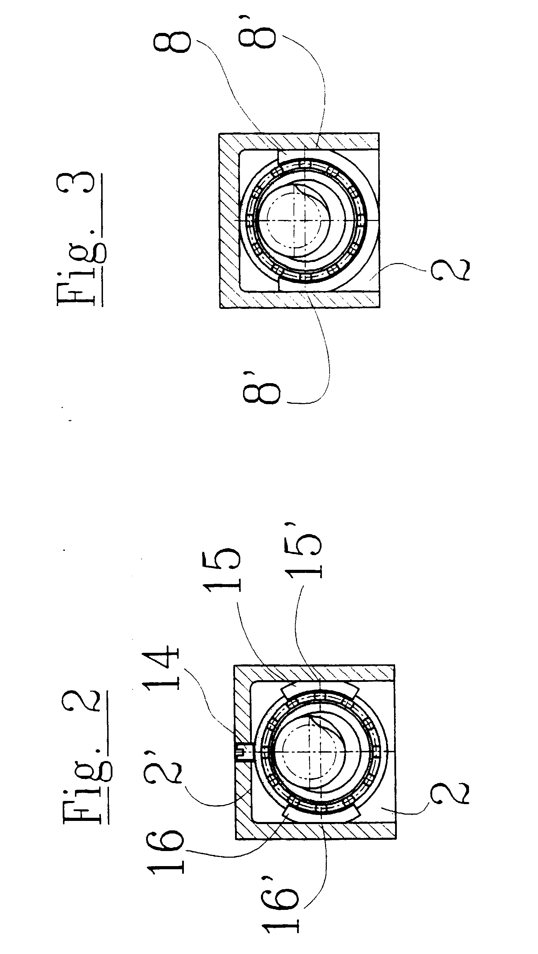

Gemäß Figur 1 besteht die Mutter für einen Wälzringgewindetrieb aus einem Gehäuse 1, in dessen einseitig geschlossene Schächte 2 radial versetzte und schräg angeordnete Wälzringe 3 in Form von handelsüblichen Rillenkugellagern eingesetzt sind. Diese greifen mit der schrägen Ringkante 4 ihres Innenrings 5 in die Gewindegänge 6 der Gewindespindel 7 ein. Auf der offenen Seite der Schächte 2 sind die Wälzringe 3 von im Querschnitt L-förmigen, aus Kunststoff bestehenden Klemmstücken 8 umfaßt. Wie die Figur 2 zeigt erstrecken sich die in der axialen Draufsicht etwa U-förmigen Klemmstücke 8 über ca. 200°, so daß eine radial formschlüssige Verbindung zwischen den Wälzring 3 und dem Klemmstück 8 erreicht wird. Dadurch ergibt sich im nicht montierten Zustand eine Baueinheit, und zwar dann, wenn im Umfangsbereich zwischen dem Außenring 9 und dem Klemmstück 8 ein Festsitz vorgesehen ist. Die Klemmstücke 8 besitzen an diametral gegenüberliegenden Stellen Abflachungen 8'. Wenn der Abstand dieser Abflachungen 8' im nicht montierten Zustand geringfügig größer ist als die Breite der Schächte 2, ergibt sich im eingebauten Zustand ein fester Sitz der Klemmstücke 8 samt Lager 3 im Gehäuse 1. Zusätzliche Mittel zur Halterung der Lager 3 sind daher nicht erforderlich.

Wie aus Figur 1 weiterhin ersichtlich ist, werden jeweils zwei in axial versetzten Schächten angeordnete, radial zur Spindel 7 aber gleich positionierte Rillenkugellager 3 so angeordnet, daß die Berührkanten 10, 11 zu den Nuten 6 der Spindel 7 zueinander hin gerichtet sind. Wenn der Abstand der Schächte 2 der Steigung der Gewindegänge 6 genau angepaßt ist, ergibt sich so eine exakte Positionierung der Spindel, wenn entsprechende Berührungskanten 12, 13 auch bei den beiden anderen radial entgegengesetzt angeordneten Rillenkugellagern vorgesehen werden. Die vier Berührungskanten ergeben auch eine starre Führung der Spindel 7, wenn die Lager 3 ohne elastische Zwischenstücke an den Böden 2' der Schächte 2 anliegen. Die Außenringe der Lager 3 liegen dabei nur an einer bestimmten Seite der Aufnahmeschächte 2 an. Da nur diese genau positioniert werden müssen, ergibt sich eine einfache und kostengünstige Gestaltung der Mutter 1. Auf der weniger genaueren Seite sind die oben genannten Klemmstücke aus Kunststoff angeordnet, die Toleranzabweichungen ausgleichen.

Aus Gründen von größeren Toleranzen bei der Fertigung der Teile oder wegen Verschleiß nach einiger Betriebszeit ist es manchmal erforderlich die Lager 3 nachzustellen. Dies wird hier durch die beiden verstellbaren Madenschrauben 14 bewirkt, die in den Bohrungen 1' des Gehäuses 1 sitzen und mit ihrer Stirnseite an der Mantelfläche der Außenringe 9 zur Anlage kommen. Durch einfaches Verstellen mindestens einer Schraube 14 kann so in einfacher Weise von außen jederzeit eine axiale und radiale Einstellung der Spindel 7 vorgenommen werden.

In Figur 3 wird eine weitere Ausgestaltungsmöglichkeit des Klemmstücks gezeigt. Dieses besteht hier aus den beiden einander diametral gegenüber angeordneten Teilen 15 und 16. Auch hier sind Abflachungen 15' und 16' vorgesehen. Die kraftschlüssige Halterung der Lager 3 im Schacht 2 sowie alle anderen oben angegebenen Vorteile werden mit den gleichen, oben beschriebenen Mitteln erreicht.

## Patentansprüche

1. Wälzringgewindetrieb mit einer Gewindespindel (7) und einer ein Mutterngehäuse (1) aufweisenden Mutter, mit mindestens einem in dem Mutterngehäuse angeordneten und einen Außenring (9) aufweisenden Wälzring (3), der exzentrisch zur Achse der Gewindespindel in einem Aufnahmeschacht (2) des Mutterngehäuses positioniert und gehalten ist und der mit mindestens einer Innenringkante oder einer Zwischenringkante in die Gewindegänge der Gewindespindel abschnittsweise eingreift,
dadurch gekennzeichnet,
daß der Außenring (9) des Wälzrings (3) im einseitig geschlossenen Aufnahmeschacht (2) des einteiligen Mutterngehäuses (1) von mindestens einem Klemmstück (8; 15, 16) mindestens an diametral gegenüberliegenden Umfangsstellen umfaßt wird, wobei im eingebauten Zustand durch Übermaß und elastischer Verformung zwischen Außenring (9) und Klemmstück sowie zwischen Klemmstück und Schachtwand ein Preßsitz vorhanden ist.

2. Wälzringgewindetrieb nach Anspruch 1, dadurch gekennzeichnet, daß mindestens ein Mantelflächenabschnitt des Klemmstückes (8; 15,16) eine Abflachung (8'; 15', 16') besitzt, die einer entsprechend geformten Fläche des Aufnahmeschachts (2) gegenübersteht.

3. Wälzringgewindetrieb nach Anspruch 1 oder 2, dadurch gekennzeichnet, daß das aus Kunststoff bestehende Klemmstück (8) in der axialen Draufsicht eine etwa U-förmige Gestalt besitzt, die den Wälzring (3) über mehr als 180° umfaßt.

4. Wälzringgewindetrieb nach Anspruch 1 oder 2, dadurch gekennzeichnet, daß das aus Kunststoff bestehende Klemmstück aus zwei an diametral gegenüberliegenden Mantel-flächenabschnitten des Außenrings (9) angeordneten Teilen (15,16) bestehen.

5. Wälzringgewindetrieb nach Anspruch 1, 2, 3 oder 4, dadurch gekennzeichnet, daß die Klemmstücke (8;15,16) im Axialschnitt etwa L-förmig ausgebildet sind.

6. Wälzringgewindetrieb nach Anspruch 1, 2, 3 oder 5, dadurch gekennzeichnet, daß die Klemmstücke (8) auf der unbelasteten Seite des Wälzrings (3) angebracht sind.

7. Wälzringgewindetrieb nach Anspruch 1, 2, 3, 4, 5 oder 6, dadurch gekennzeichnet, daß die Wälzringe (3) mit ihren Klemmstücken (8;15,16) in axial versetzten Schächten (2) so angeordnet sind, daß die Berührungskanten (10,11 bzw. 12,13) von mindestens zwei Wälzringen (3) zueinander hin oder voneinander weg gerichtet sind.

8. Wälzringgewindetrieb nach Anspruch 1, 2, 3, 4, 5, 6 oder 7, dadurch gekennzeichnet, daß auf der belasteten Seite mindestens eines Wälzringes (3) mindestens eine radial verstellbare Schraube (14) angeordnet ist, deren innere Stirnfläche an der Mantelfläche des Außenrings (9) anliegt.

9. Wälzringgewindetrieb nach Anspruch 1, 2, 3, 4, 5, 6, 7 oder 8, dadurch gekennzeichnet, daß als Wälzring (2) ein spielfreies Rillenkugellager verwendet wird.

## Claims

1. Rolling ring screw drive with a threaded spindle (7) and a nut comprising a nut housing (1), with at least one rolling ring (3) which is arranged in the nut housing, comprises an outer ring (9), is positioned and held eccentrically to the axis of the threaded spindle in a receiving duct (2) of the nut housing and engages in portions with at least one inner ring edge or one intermediate ring edge in the turns of the threaded spindle, characterised in that the outer ring (9) of the rolling ring (3) is embraced at least at diametrically opposed peripheral points by at least one clamping member (8; 15, 16) in the receiving duct (2) closed on one side of the integral nut housing (1), a driving fit being obtained in the installed state by means of an oversize and elastic deformation between outer ring (9) and clamping member and between clamping member and duct wall.

2. Rolling ring screw drive according to claim 1, characterised in that at least one external surface portion of the clamping member (8; 15, 16) has a flattened region (8'; 15', 16') which opposes a correspondingly shaped surface of the receiving duct (2).

3. Rolling ring screw drive according to claim 1 or 2, characterised in that the clamping member (8) consisting of plastics material has, in the axial plan view, a substantially U-shaped configuration which embraces the rolling ring (3) over more that 180°.

4. Rolling ring screw drive according to claim 1 or 2, characterised in that the clamping member consisting of plastics material consists of two parts (15, 16) arranged on diametrically opposed external surface portions of the outer ring (9).

5. Rolling ring screw drive according to claim 1, 2, 3 or 4, characterised in that the clamping members (8; 15, 16) are substantially L-shaped in an axial section.

6. Rolling ring screw drive according to claim 1, 2, 3 or 5, characterised in that the clamping members (8) are arranged on the unloaded side of the rolling ring (3).

7. Rolling ring screw drive according to claim 1, 2, 3, 4, 5 or 6, characterised in that the rolling rings (3) with their clamping members (8; 15, 16) are arranged in axially offset ducts (2) in such a way that the contacting edges (10, 11 or 12, 13) of at least two rolling rings (3) are directed toward one another or away from one another.

8. Rolling ring screw drive according to claim 1, 2, 3, 4, 5, 6 or 7, characterised in that on the loaded side of at least one rolling ring (3) there is arranged at least one radially adjustable screw (14) of which the inner end face rests on the external surface of the outer ring (9).

9. Rolling ring screw drive according to claim 1, 2, 3, 4, 5, 6, 7 or 8, characterised in that a deep groove ball bearing without play is used as rolling ring (2).

## Revendications

1. Mécanisme à roulement et vis composé d'une vismère (7) et d'un écrou muni d'une cage d'écrou (1), comportant au moins un roulement (3) disposé à l'intérieur de la cage d'écrou et présentant une bague extérieure (9), ledit roulement étant maintenu et positionné de manière excentrique à l'intérieur d'un logement (2) pratiqué dans la cage d'écrou et s'engrène, section par section, par au moins une arête de sa bague intérieure ou une arête de sa bague intermédiaire dans les spires de la vis-mère,
caractérisé en ce que,
la bague extérieure (9) du roulement (3) est entourée, à l'intérieur du logement (2) fermé d'un seul côté de la cage d'écrou monobloc (1), par au moins un élément de serrage (8, 15, 16) en des points diamétralement opposés du pourtour, ce qui, à l'état monté, assure la présence d'un ajustage serré entre ladite pièce de serrage et la paroi du logement sous l'effet d'un surdimensionnement et d'une déformation élastique entre la bague extérieure (9) et ledit élément de serrage.

2. Mécanisme à roulement et vis selon la revendication 1, caractérisé en ce qu'au moins une section de la surface enveloppante de l'élément de serrage (8, 15, 16) présente un aplatissement (8', 15', 16') auquel fait face une surface de forme correspondante du logement (2).

3. Mécanisme à roulement et vis selon les revendications 1 ou 2, caractérisé en ce que l'élément de serrage (8) réalisé en matière plastique présente, vu en projection axiale, sensiblement la forme d'un U lequel entoure le roulement (3) sur plus de 180°.

4. Mécanisme à roulement et vis selon les revendications 1 ou 2, caractérisé en ce que l'élément de serrage réalisé en matière plastique est composé de deux parties (15, 16) disposées sur deux sections diamétralement opposées de la surface enveloppante de la bague extérieure (9).

5. Mécanisme à roulement et vis selon les revendications 1, 2, 3 ou 4, caractérisé en ce que les éléments de serrage (8, 15, 16), vus en coupe axiale, sont conformés sensiblement en forme de L.

6. Mécanisme à roulement et vis selon les revendications 1, 2, 3 ou 5, caractérisé en ce que les éléments de serrage (8) sont fixés sur le côté non-chargé du roulement (8).

7. Mécanisme à roulement et vis selon les revendications 1, 2, 3, 4, 5 ou 6, caractérisé en ce que les roulements (3) avec leurs éléments de serrage (8, 15, 16) sont disposés dans des logements (2) axialement décalés de telle sorte que les arêtes de contact (10, 11 et 12, 13) d'au moins deux roulements (3) sont orientées dans des direction mutuellement convergentes ou bien dans des directions mutuellement divergentes.

8. Mécanisme à roulement et vis selon les revendications 1, 2, 3, 4, 5, 6 ou 7, caractérisé en ce que sur le côté chargé d'au moins un roulement (3) est disposé au moins un boulon (14) radialement réglable dont la face frontale intérieure s'applique contre la face enveloppante de la bague extérieure (9).

9. Mécanisme à roulement et vis selon les revendications 1, 2, 3, 4, 5, 6, 7 ou 8, caractérisé en ce que pour servir de roulement (2) on utilise un roulement rainuré à billes sans jeu.
